# EUROPEAN PATENT APPLICATION

(11) **EP 2 871 853 A1**
(43) Date of publication of application: **13.05.2015**
(21) Application number: 13810211.6
(22) Date of filing: 09.06.2013
(51) Int. Cl.: H04R 3/00

(54) **IDENTIFICATION DEVICE FOR MATCHING AUDIO INTERFACE OF MOBILE TERMINAL AND ELECTRONIC SIGNATURE TOOL**

(30) Priority: 28.06.2012 CN 201220314253 U
(71) Applicant: Tendyron Corporation, Beijing 100083 (CN)
(72) Inventor: LI, Dongsheng, Beijing 100083 (CN)
(74) Representative: Maiwald Patentanwalts GmbH
(86) International application number: PCT/CN2013/077080
(87) International publication number: WO 2014/000570

(57) **Abstract**

Provided are an identification device for matching an audio interface of a mobile terminal and an electronic signature tool. The audio interface of a mobile terminal comprises a first pin, a second pin and a third pin. The first pin is one of a microphone pin and a ground pin; the second pin is the other one of the microphone pin and the ground pin; and the third pin is one of a single-channel audio output pin and a multichannel audio output pin, wherein the third pin is connected to the first pin and the second pin through a switch module. When the switch module connects the third pin to the first pin to form a loop, the impedance value of the loop matches the identification resistance of the mobile terminal; and when the switch module connects the third pin to the second pin to form a loop, the impedance value of the loop matches the identification resistance of the mobile terminal. Therefore the impedance of the loop between the audio output pin of the audio interface and the ground pin matches the identification resistance of the mobile terminal, thereby ensuring that an inserted device passes the detection of the mobile terminal.

## Description

### FIELD

The present disclosure relates to an electronic technique field, and more particularly relates to a device for matching and identifying an audio interface of a mobile terminal and an electronic signature token.

### BACKGROUND

An audio signal transmission between an audio interface (e.g., a headphone jack) of a conventional audio signal sending apparatus (e.g., a mobile terminal) and an audio interface of an audio signal receiving apparatus (e.g., a headphone) is generally performed using a single channel or a multiple channel, in which a third pin is used as an audio output pin of the single channel, the third pin and a fourth pin are used as audio output pins of the multiple channel, i.e. a left channel pin and a right channel pin. However, the first pin and the second pin of different audio interfaces perform different functions, i.e. there are two types of audio interfaces: one type of audio interface having a first pin as a microphone pin (MIC pin) and a second pin as a ground pin (GND pin), and the other type of audio interface having a first pin as a ground pin (GND pin) and a second pin as a microphone pin (MIC pin).

Due to different types of audio interfaces, when an audio interface of an audio signal sending apparatus (e.g., a mobile terminal) is not matched with an audio interface of an audio signal receiving apparatus (e.g., a headphone, a headset, or an electronic signature token), it is impossible to perform the communication between the audio signal sending apparatus and the audio signal receiving apparatus via microphone pins of the audio interfaces, or to perform the audio signal transmission between the audio signal sending apparatus and the audio signal receiving apparatus via audio output pins (i.e. left channel pins and right channel pins) of the audio interfaces normally.

With the continuous advance of mobile internet technology, the capability of the mobile terminal becomes more and more powerful, and therefore the demand for mobile payment becomes more and more urgent. However, due to the small volume of the mobile terminal, the number of external interfaces is very small, so how to connect the electronic signature token and the mobile terminal has become a serious problem. Especially since there are different types of audio interfaces of the mobile terminal, the successful connection between the mobile terminal and the electronic signature token is hindered. In particular, since the types of audio interfaces of the mobile terminal are various, after inserted into the audio interfaces of the mobile terminal, the electronic signature token may not be identified, so that it is impossible to establish the communication between the electronic signature token and the audio interfaces of the mobile terminal.

### SUMMARY

Embodiments of the present disclosure seek to solve at least one of the problems existing in the related art to at least some extent.

Accordingly, an objective of the present disclosure is to provide a device for matching and identifying an audio interface of a mobile terminal.

Another objective of the present disclosure is to provide an electronic signature token.

In order to achieve the above objectives, embodiments of a first aspect of the present disclosure provide a device for matching and identifying an audio interface of a mobile terminal, in which the audio interface of the mobile terminal comprises a first pin, a second pin and a third pin, the first pin is one of a microphone pin and a ground pin, the second pin is the other one of the microphone pin and the ground pin, the third pin is a single-channel audio output pin or one of multichannel audio output pins, the third pin is connected with the first pin and the second pin via a switching module respectively; when the switching module connects the third pin and the first pin to form a first loop, an impedance of the first loop is matched with an identification resistance of the mobile terminal; when the switching module connects the third pin and the second pin to form a second loop, an impedance of the second loop is matched with the identification resistance of the mobile terminal.

Furthermore, the audio interface further comprises a fourth pin, the fourth pin is the other one of the multichannel audio output pins; the fourth pin is connected with the first pin and the second pin via the switching module respectively; when the switching module connects the fourth pin and the first pin to form a third loop, an impedance of the third loop is matched with the identification resistance of the mobile terminal; when the switching module connects the fourth pin and the second pin to form a fourth loop, an impedance of the fourth loop is matched with the identification resistance of the mobile terminal.

Furthermore, the third pin is connected with the switching module via a first matching module; when the switching module connects the third pin and the first pin to form the first loop, the impedance of the first loop is matched with the identification resistance of the mobile terminal; when the switching module connects the third pin and the second pin to form the second loop, the impedance of the second loop is matched with the identification resistance of the mobile terminal.

Furthermore, the audio interface further comprises the fourth pin, the fourth pin is the other one of the multichannel audio output pins; the fourth pin is connected with the switching module via a second matching module; when the switching module connects the fourth pin and the first pin to form the third loop, the impedance of the third loop is matched with the identification resistance of the mobile terminal; when the switching module connects the fourth pin and the second pin to form the fourth loop, the impedance of the fourth loop is matched with the identification resistance of the mobile terminal.

Furthermore, each of the first matching module and the second switching module is a resistor, a loudspeaker, a transformer, a resistor and a comparator connected in parallel, or a resistor and an operational amplifier connected in parallel.

Furthermore, the first pin and the second pin of the audio interface are connected via a bidirectional conduction element.

Furthermore, the switching module is a manual toggle switch, an automatic toggle switch, or a module performing a unidirectional conduction function in a chip.

Furthermore, the automatic toggle switch has a unidirectional conduction function, and in the module performing the unidirectional conduction function in the chip, a unidirectional conduction direction is to flow to the first pin or the second pin.

Furthermore, the switching module connecting the third pin and the first pin to form the first loop comprises the third pin and the first pin forming the first loop when a first contact in the switching module is connected; the switching module connecting the third pin and the second pin to form the second loop comprises the third pin and the second pin forming the second loop when a second contact in the switching module is connected; the switching module connecting the fourth pin and the first pin to form the third loop comprises the fourth pin and the first pin forming the third loop when the first contact in the switching module is connected; the switching module connecting the fourth pin and the second pin to form the fourth loop comprises the fourth pin and the second pin forming the fourth loop when the second contact in the switching module is connected.

Embodiments of a second aspect of the present disclosure provide an electronic signature token comprising the abovementioned device for matching and identifying the audio interface of the mobile terminal.

With the device for matching and identifying the audio interface of the mobile terminal and the electronic signature token according to embodiments of the present disclosure, since the impedance of a loop formed by an audio output pin (i.e. a single-channel audio output pin, or a multichannel left channel pin and/or a multichannel right channel pin) and a ground pin of the audio interface may be matched with the identification resistance of the mobile terminal, when the mobile terminal performs a detection on an apparatus (e.g., an audio signal receiving apparatus) inserted into the audio interface of the mobile terminal, it is possible to ensure that the inserted apparatus passes the detection of the mobile terminal, such that an audio signal may be transmitted from the mobile terminal to the audio signal receiving apparatus.

Meanwhile, with the device for matching and identifying the audio interface of the mobile terminal and the electronic signature token according to embodiments of the present disclosure, the electronic signature token may be correctly identified by the mobile terminal, thus ensuring the successful connection between the mobile terminal and the electronic signature token.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions of embodiments made with reference to the drawings, in which:
Fig. 1 is a first schematic diagram of a device for matching and identifying an audio interface of a mobile terminal according to Embodiment 1 of the present disclosure;
Fig. 2 is a second schematic diagram of the device for matching and identifying the audio interface of the mobile terminal according to Embodiment 1 of the present disclosure;
Fig. 3 is a third schematic diagram of the device for matching and identifying the audio interface of the mobile terminal according to Embodiment 1 of the present disclosure;
Fig. 4 is a schematic diagram of a device for matching and identifying an audio interface of a mobile terminal according to Embodiment 2 of the present disclosure;
Fig. 5 is a first schematic diagram of a device for matching and identifying an audio interface of a mobile terminal according to Embodiment 3 of the present disclosure;
Fig. 6 is a second schematic diagram of the device for matching and identifying the audio interface of the mobile terminal according to Embodiment 3 of the present disclosure;
Fig. 7 is a third schematic diagram of the device for matching and identifying the audio interface of the mobile terminal according to Embodiment 3 of the present disclosure;
Fig. 8 is a fourth schematic diagram of the device for matching and identifying the audio interface of the mobile terminal according to Embodiment 3 of the present disclosure;
Fig. 9 is a fifth schematic diagram of the device for matching and identifying the audio interface of the mobile terminal according to Embodiment 3 of the present disclosure;
Fig. 10 is a schematic diagram of a device for matching and identifying an audio interface of a mobile terminal according to Embodiment 4 of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

In the specification, unless specified or limited otherwise, relative terms such as "central", "longitudinal", "lateral", "upper", "lower", "front", "rear", "left", "right", "vertical", "horizontal", "top", "bottom," "inner", "outer" should be construed to refer to the orientation as then described or as shown in the drawings under discussion. These relative terms are for convenience of description and do not require that the present disclosure be constructed or operated in a particular orientation, and thus shall not be construed to limit the present disclosure. In addition, terms such as "first" and "second" are used herein for purposes of description and are not intended to indicate or imply relative importance or significance or to imply the number or position of indicated technical features. Further, terms such as "first pin" and "second pin" are used to distinguish pins, but are not used to define the position of pins.

In the present disclosure, unless specified or limited otherwise, the terms "mounted," "connected," "coupled," and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

An method and a device for matching and identifying an audio interface of a mobile terminal and an electronic signature token according to embodiments of the present disclosure will be described below with reference to the drawings.

In the device for matching and identifying the audio interface of the mobile terminal according to embodiments of the present disclosure, an audio interface of the mobile terminal comprises a first pin, a second pin, a third pin, and a fourth pin. In a specific example, the third pin and the fourth pin are defined as follows: the third pin of the audio interface is one of audio output pins, i.e. one of a left channel output pin and a right channel output pin; and the fourth pin of the audio interface is the other one of the audio output pins, i.e. the other one of the left channel output pin and the right channel output pin. The first pin is one of a microphone pin (MIC pin) and a ground pin (GND pin), and the second pin is the other one of the microphone pin (MIC pin) and the ground pin (GND pin).

According to embodiments of the present disclosure, the audio interface may be any type of headphone plug or jack, for example, a headphone plug having a diameter of 3.5mm or 2.5mm or a headphone jack having a diameter of 3.5mm or 2.5mm.

According to embodiments of the present disclosure, if the audio interface is a headphone plug, an audio signal receiving apparatus comprising the audio interface may be directly inserted into a headphone jack of an audio signal sending apparatus (e.g., a smart phone). If the audio interface is a headphone jack, the audio signal receiving apparatus comprising the audio interface may be connected with the audio signal sending apparatus (e.g., the smart phone) via an adapter having both ends as headphone plugs.

### Embodiment 1

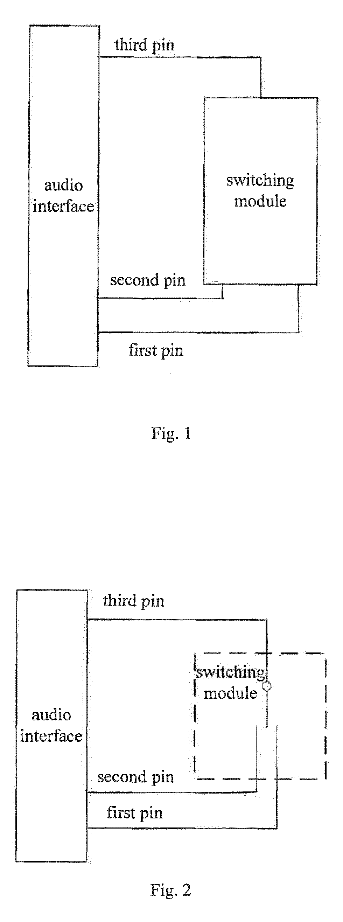

Fig. 1 is a schematic diagram of a device for matching and identifying an audio interface of a mobile terminal according to Embodiment 1 of the present disclosure. Referring to Fig. 1, the device for matching and identifying the audio interface of the mobile terminal comprises an audio interface. A third pin of the audio interface is connected with a first pin and a second pin via a switching module respectively. When a first contact in the switching module is connected, the third pin and the first pin form a first loop, and an impedance of the first loop is matched with an identification resistance of the mobile terminal. When a second contact in the switching module is connected, the third pin and the second pin form a second loop, and an impedance of the second loop is matched with the identification resistance of the mobile terminal.

In some embodiments, the identification resistance of the mobile terminal is generally 8 ohms, 16 ohms, or 32 ohms.

With the method for matching and identifying the audio interfaces of the mobile terminal according to embodiments of the present disclosure, since the impedance of a loop formed by an audio output pin (i.e. a single-channel audio output pin, or a multichannel left channel pin and/or a multichannel right channel pin) and a ground pin of the audio interface may be matched with the identification resistance of the mobile terminal, when the mobile terminal performs a detection on an apparatus (e.g., an audio signal receiving apparatus) inserted into the audio interface of the mobile terminal, it is possible to ensure that the inserted apparatus passes the detection of the mobile terminal, such that an audio signal may be transmitted from the mobile terminal to the audio signal receiving apparatus.

Certainly, the switching module may be implemented in a way shown in any of Figs. 2-3. For example, the switching module is a manual toggle switch, an automatic toggle switch, or a module performing a unidirectional conduction function in a chip.

Referring to Fig. 2, the switching module is a toggle switch.

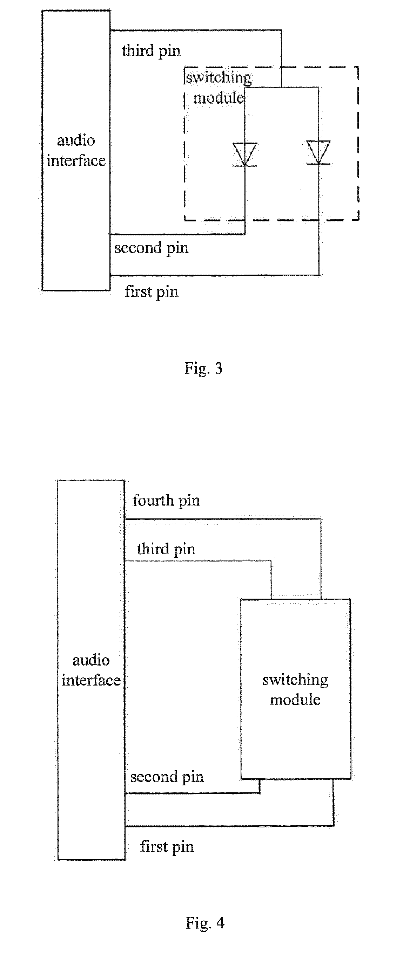

Referring to Fig. 3, the switching module is a module performing a unidirectional conduction function in a chip. A chip having a module performing a unidirectional conduction function may be applied in the present disclosure. For example, the module performing the unidirectional conduction function may be a diode, a triode, or a MOS transistor.

The unidirectional conduction function means only conduction in a circuit where the ground pin (GND pin) is located, but no conduction in a circuit where the microphone pin (MIC pin) is located.

In the automatic toggle switch performing the unidirectional conduction function shown in Fig. 2 and in the module performing the unidirectional conduction function in the chip shown in Fig. 3, a unidirectional conduction direction is to flow to the first pin or the second pin.

### Embodiment 2

Fig. 4 is a schematic diagram of a device for matching and identifying an audio interface of a mobile terminal according to Embodiment 2 of the present disclosure. Referring to Fig. 4, this embodiment differs from Embodiment 1 in that the audio interface further comprises a fourth pin, and the fourth pin is the other one of the multichannel audio output pins. The fourth pin is connected with the first pin and the second pin via the switching module respectively. When the first contact in the switching module is connected, the fourth pin and the first pin form a third loop, and an impedance of the third loop is matched with the identification resistance of the mobile terminal. When the second contact in the switching module is connected, the fourth pin and the second pin form a fourth loop, and an impedance of the fourth loop is matched with the identification resistance of the mobile terminal.

Since the audio signal sent from the mobile terminal to the audio signal receiving apparatus may be transmitted via only one circuit, the third pin or the fourth pin may be used for audio signal transmission. Certainly, two circuits may be used together, that is, the third pin and the fourth pin may be used together, so as to transmit the audio signal to different audio signal receiving apparatuses or different modules in the same audio signal receiving apparatus.

### Embodiment 3

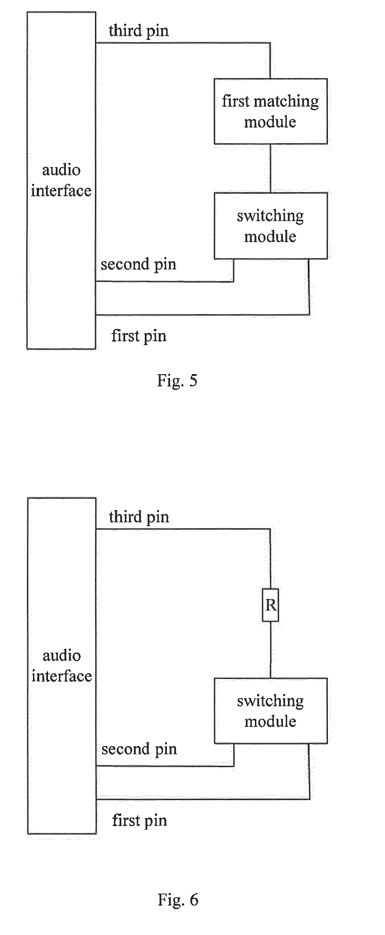

Fig. 5 is a schematic diagram of a device for matching and identifying an audio interface of a mobile terminal according to Embodiment 3 of the present disclosure. Referring to Fig. 5, this embodiment differs from Embodiment 1 in that the device for matching and identifying the audio interface of the mobile terminal in this embodiment further comprises a first matching module. The third pin is connected with the switching module via the first matching module. When the first contact in the switching module is connected, the third pin and the first pin form the first loop, and the impedance of the first loop is matched with the identification resistance of the mobile terminal. When the second contact in the switching module is connected, the third pin and the second pin form the second loop, and the impedance of the second loop is matched with the identification resistance of the mobile terminal.

At this time, by means of the first matching module, in case an impedance of a loop formed by means of the switching module may not be matched with the identification resistance of the mobile terminal, it is possible to ensure that an impedance of a loop formed by means of the switching module in combination with the first matching module may be matched with the identification resistance of the mobile terminal.

In this embodiment, the first matching module may be a resistor, a loudspeaker, a transformer, a resistor and a comparator connected in parallel, or a resistor and an operational amplifier connected in parallel.

The first matching module may be implemented in a way shown in any of Figs. 6-9.

Referring to Fig. 6, the first matching module is a resistor.

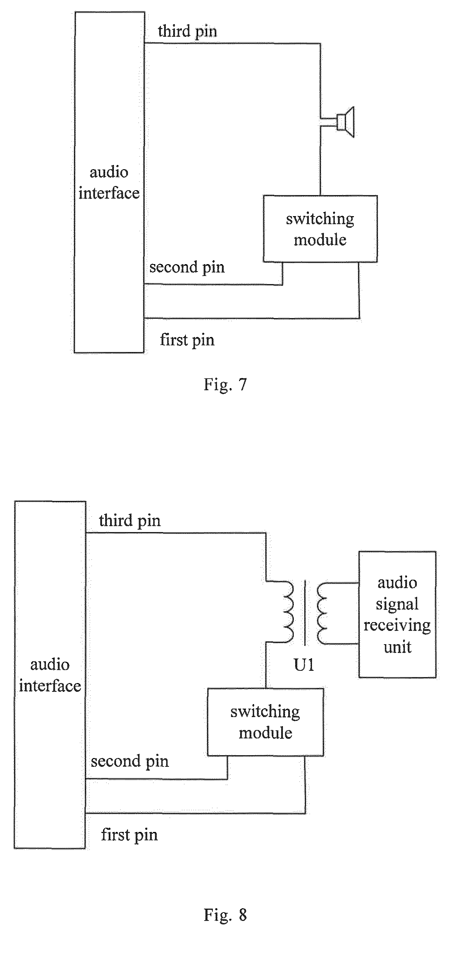

Referring to Fig. 7, the first matching module is a loudspeaker.

Referring to Fig. 8, the first matching module is a transformer, in which an audio signal receiving unit may be a receiving unit of the audio signal receiving apparatus.

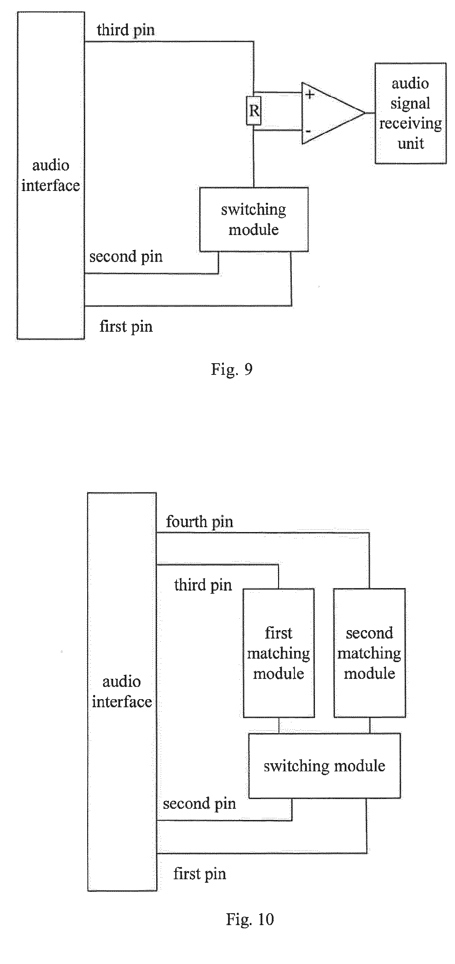

Referring to Fig. 9, the first matching module is a resistor and a comparator connected in parallel. Certainly, the comparator may be replaced by an operational amplifier. An audio signal receiving unit may be a receiving unit of the audio signal receiving apparatus.

### Embodiment 4

Fig. 10 is a schematic diagram of a device for matching and identifying an audio interface of a mobile terminal according to Embodiment 4 of the present disclosure. Referring to Fig. 10, this embodiment differs from Embodiment 3 in that the fourth pin is connected with the switching module via a second matching module. When the first contact in the switching module is connected, the third pin and the first pin form the first loop, the fourth pin and the first pin form the third loop, and the impedance of each of the first loop and the third loop is matched with the identification resistance of the mobile terminal. When the second contact in the switching module is connected, the third pin and the second pin form the second loop, the fourth pin and the second pin form the fourth loop, and the impedance of each of the second loop and the fourth loop is matched with the identification resistance of the mobile terminal.

At this time, by means of the first matching module and the second matching module, in case an impedance of a loop formed by means of the switching module may not be matched with the identification resistance of the mobile terminal, it is possible to ensure that an impedance of a loop formed by means of the switching module in combination with the first matching module and the second matching module may be matched with the identification resistance of the mobile terminal.

In this embodiment, the second matching module may be a resistor, a loudspeaker, a transformer, a resistor and a comparator connected in parallel, or a resistor and an operational amplifier connected in parallel.

Certainly, the first matching module and the second matching module may be implemented via different circuits. Preferably, the impedance of the first matching module is equal to that of the second matching module, such that it is possible to ensure that the mobile terminal performs the impedance matching identification for the audio signal receiving apparatus (e.g., a headphone, a headset, or an electronic signature token) connected with the audio interface of the mobile terminal, when the third pin and the fourth pin are used together to transmit the audio signal.

Therefore, when the audio signal receiving apparatus comprising the device for matching and identifying the audio interface of the mobile terminal according to embodiments of the present disclosure is connected with the mobile terminal, no matter the type of the first pin and the second pin of the audio interface of the mobile terminal, the audio signal receiving apparatus may successfully pass the detection and identification of the audio signal sending apparatus (e.g., the mobile terminal) for the third pin and/or the fourth pin (i.e. the audio output pins), and normally receive and process the audio signal using the third pin and/or the fourth pin.

Certainly, further, alternatively, in this embodiment, the first pin and the second pin may be connected with each other via a bidirectional conduction element such as a resistor R. The resistance of the bidirectional conduction element may range from 7.7 KΩ to 15 KΩ, generally may be 10 KΩ, 12 KΩ, or 15 KΩ.

If the first pin and the second pin are connected with each other via the bidirectional conductive element such as a resistor, the audio signal receiving apparatus according to embodiments of the present disclosure may successfully pass the detection and identification of the mobile terminal for the microphone pin.

### Embodiment 5

This embodiment provides an electronic signature token comprising the device for matching and identifying the audio interface of the mobile terminal according to the above embodiments. For example, the electronic signature token is provided with the device for matching and identifying the audio interface of the mobile terminal according to the above embodiments. Thus, the electronic signature token may be connected with an audio interface of a mobile terminal (e.g., a mobile phone terminal, or a tablet PC) via the device for matching and identifying the audio interface of the mobile terminal, so as to communicate with the mobile terminal. For example, the electronic signature token is a security apparatus, for example, an apparatus having similar function as a USB KEY. Therefore, the electronic signature token may be conveniently communicated with an apparatus (e.g., a mobile phone) without a USB interface via the audio interfaces, and may be communicated with any type of mobile terminals (such as mobile phones) via the audio interfaces.

Certainly, in some embodiments, the switching module may be implemented using any device or circuit (e.g., a diode, a triode, or a MOS transistor) capable of performing a unidirectional conduction function.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases such as "in an embodiment," "in some embodiments," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments of the present disclosure have been shown and described, it would be appreciated by those skilled in the art that changes, modifications, alternatives, and variations can be made in the embodiments without departing from the spirit, principles and scope of the present disclosure, and the scope of the present disclosure is defined by the claims and equivalents thereof.

## Claims

1. A device for matching and identifying an audio interface of a mobile terminal, wherein the audio interface of the mobile terminal comprises a first pin, a second pin and a third pin, the first pin is one of a microphone pin and a ground pin, the second pin is the other one of the microphone pin and the ground pin, the third pin is a single-channel audio output pin or one of multichannel audio output pins,
the third pin is connected with the first pin and the second pin via a switching module respectively;
when the switching module connects the third pin and the first pin to form a first loop, an impedance of the first loop is matched with an identification resistance of the mobile terminal;
when the switching module connects the third pin and the second pin to form a second loop, an impedance of the second loop is matched with the identification resistance of the mobile terminal.

2. The device according to claim 1, wherein the audio interface further comprises a fourth pin, the fourth pin is the other one of the multichannel audio output pins;
the fourth pin is connected with the first pin and the second pin via the switching module respectively;
when the switching module connects the fourth pin and the first pin to form a third loop, an impedance of the third loop is matched with the identification resistance of the mobile terminal;
when the switching module connects the fourth pin and the second pin to form a fourth loop, an impedance of the fourth loop is matched with the identification resistance of the mobile terminal.

3. The device according to claim 1 or 2, wherein the third pin is connected with the switching module via a first matching module;
when the switching module connects the third pin and the first pin to form the first loop, the impedance of the first loop is matched with the identification resistance of the mobile terminal;
when the switching module connects the third pin and the second pin to form the second loop, the impedance of the second loop is matched with the identification resistance of the mobile terminal.

4. The device according to claim 3, wherein the audio interface further comprises the fourth pin, the fourth pin is the other one of the multichannel audio output pins;
the fourth pin is connected with the switching module via a second matching module;
when the switching module connects the fourth pin and the first pin to form the third loop, the impedance of the third loop is matched with the identification resistance of the mobile terminal;
when the switching module connects the fourth pin and the second pin to form the fourth loop, the impedance of the fourth loop is matched with the identification resistance of the mobile terminal.

5. The device according to claim 3 or 4, wherein each of the first matching module and the second switching module is a resistor, a loudspeaker, a transformer, a resistor and a comparator connected in parallel, or a resistor and an operational amplifier connected in parallel.

6. The device according to any one of claims 1-5, wherein the first pin and the second pin of the audio interface are connected via a bidirectional conduction element.

7. The device according to any one of claims 1-6, wherein the switching module is a manual toggle switch, an automatic toggle switch, or a module performing a unidirectional conduction function in a chip.

8. The device according to claim 7, wherein the automatic toggle switch has a unidirectional conduction function, and in the module performing the unidirectional conduction function in the chip, a unidirectional conduction direction is to flow to the first pin or the second pin.

9. The device according to any one of claims 1-8, wherein
the switching module connecting the third pin and the first pin to form the first loop comprises the third pin and the first pin forming the first loop when a first contact in the switching module is connected;
the switching module connecting the third pin and the second pin to form the second loop comprises the third pin and the second pin forming the second loop when a second contact in the switching module is connected;
the switching module connecting the fourth pin and the first pin to form the third loop comprises the fourth pin and the first pin forming the third loop when the first contact in the switching module is connected;
the switching module connecting the fourth pin and the second pin to form the fourth loop comprises the fourth pin and the second pin forming the fourth loop when the second contact in the switching module is connected.

10. An electronic signature token comprising a device for matching and identifying an audio interface of a mobile terminal according to any one of claims 1-9.
